# EUROPÄISCHE PATENTSCHRIFT

(11) **EP 1 733 938 B1**
(45) Veröffentlichungstag und Bekanntmachung des Hinweises auf die Patenterteilung: **26.05.2010**
(21) Anmeldenummer: 06011031.9
(22) Anmeldetag: 30.05.2006
(51) Int. Cl.: B60R 25/00

(54) **Verfahren zur Nutzungsüberlassung eines Fahrzeuges und Sicherheitselement dafür**
Method for vehicle cession use and security element for that
Méthode pour cession et utilisation d'un véhicule et élément sécuritaire pour cela

(30) Priorität: 13.06.2005 DE 102005027316
(43) Veröffentlichungstag der Anmeldung: 20.12.2006
(73) Patentinhaber: Latsch, Uwe, 57072 Siegen (DE)
(72) Erfinder: Latsch, Uwe, 57072 Siegen (DE)
(74) Vertreter: COHAUSZ DAWIDOWICZ HANNIG & SOZIEN

(56) Entgegenhaltungen:
- EP-A- 0 926 023
- WO-A-84/03785
- WO-A-97/11440
- DE-A1- 10 321 750
- US-A- 4 982 072

## Beschreibung

Die Erfindung betrifft ein Verfahren zur Nutzungsüberlassung wenigstens eines Fahrzeuges an eine Person nach Prüfung einer amtlichen Führungserlaubnis dieser Person, wobei vor einer Nutzungsüberlassung das physische Vorhandensein einer amtlichen Führungserlaubnis bei der nutzenden Person geprüft wird, automatisch durch eine Lesevorrichtung die Existenz eines an einem amtlichen die Führungserlaubnis belegenden Dokument befestigten Sicherheitselementes geprüft wird, bei positiver Existenzprüfung die Nutzung erlaubt und bei negativer Existenzprüfung die Nutzung verweigert wird.

Die Erfindung betrifft weiterhin ein Sicherheitselement zur nachträglichen Anbringung an ein Dokument, insbesondere zur Benutzung im Rahmen dieses Verfahrens.

Im Stand der Technik ist es bekannt, Fahrzeuge, wie beispielsweise Kraftfahrzeuge, d.h. Autos, LKW, Motorräder etc. sowie auch z.B. Flugzeuge, deren Führung durch eine Person sämtlichst voraussetzen, dass diese Person hierfür eine amtliche Führungserlaubnis besitzt, zur Nutzung zu überlassen. Beispielsweise erfolgt dies üblicherweise bei Autovermietungen, Carsharing-Betreibern, Flugschulen etc.

Üblicherweise wird es dabei vorgesehen, dass vor einer Nutzungsüberlassung die nutzende Person bei der Beantragung einer solchen Nutzungsüberlassung die amtliche Führungserlaubnis in der Form eines Dokumentes, wie beispielsweise eines Führerscheins, eines Pilotenscheins oder eines ähnlichen Erlaubnisscheins physisch vorlegt, damit vor der Nutzungsüberlassung geprüft werden kann, nicht nur, dass die Person jemals diese Führungserlaubnis erworben hat, sondern auch aktuell zum Zeitpunkt der Nutzungsüberlassung die Führungserlaubnis tatsächlich besitzt.

Nachteilig hierbei ist es, dass für eine Nutzungsüberlassung Personal benötigt wird, um zu überprüfen, ob die für die Nutzung vorgesehene Person tatsächlich das Dokument über die Führungserlaubnis vorlegen kann. Insofern erweisen sich Modelle zur Nutzungsüberlassung von Fahrzeugen derzeit als personal- und somit kostenintensiv.

Darüber hinaus kann im Rahmen bekannter Modelle zur Nutzungsüberlassung von Fahrzeugen nicht ausgeschlossen werden, dass eine Person während einer Nutzungszeit die Führungserlaubnis verliert und insofern nicht mehr berechtigt ist, dass zur Nutzung überlassene Fahrzeug zu nutzen. Dies ist insbesondere insoweit kritisch, als dass ein eingetragene Fahrzeughalter verantwortlich im juristischen Sinne dafür ist, dass ein Fahrzeug nur an Personen abgegeben wird, die aktuell eine insbesondere amtliche Führungserlaubnis besitzen.

Aus der DE 199 36 392 ist es bekannt geworden, im Rahmen eines Vermietsystems eine Onlineanbindung vorzunehmen an eine amtliche Führerscheindatenbank. Ein derartiges Verfahren ist zum einen aus datenschutzrechtlichen Gründen zu beanstanden, die rechtliche Zulässigkeit ist fraglich und es wäre eine permanente Onlineanbindung erforderlich.

Aus der WO 84/03785 ist eine Start-, Betriebs- und Kontrolleinheit für Kraftfahrzeuge bekannt, bei der Funktionen wie das Starten des Motors erst nach Einschieben einer Identitätskarte mit einem fest vorgesehenen Magnetstreifen in eine Leseeinheit möglich sind.

Vor dem Hintergrund dieses Standes der Technik ist es die Aufgabe der Erfindung, ein Verfahren bereitzustellen sowie insbesondere im Zusammenhang mit diesem Verfahren ein Sicherheitselement, um ohne personellen Aufwand eine Nutzungsüberlassung eines Fahrzeugs an eine Person durchführen zu können und hierbei zu prüfen, dass die betreffende nutzende Person im physischen Besitz einer insbesondere amtlichen Führungserlaubnis ist.

Diese Aufgabe wird im Rahmen des erfindungsgemäßen Verfahrens dadurch gelöst, dass - wie eingangs genannt - automatisch durch eine Lesevorrichtung die Existenz eines an einem insbesondere amtlichen, die Führungserlaubnis belegenden Dokument befestigten Sicherheitselementes geprüft wird, wobei bei positiver Existenzprüfung eine Nutzung erlaubt und bei negativer Existenzprüfung eine Nutzung verweigert wird und wobei erfindungsgemäß ein Sicherheitselement nachträglich von einer autorisierten Stelle an einem amtlichen die Führungserlaubnis belegenden Dokument befestigt wird, welches wenigstens einen Transponder umfasst mit wenigstens einem Chip und wenigstens einer Antenne wobei das Ablösen des Sicherheitselementes eine Zerstörung wenigstens eines Teilbereiches eines Transponders bewirkt.

Auf diese Art und Weise kann im Rahmen des erfindungsgemäßen Verfahrens überprüft werden, ob die Person, die aktuell um die Nutzungsüberlassung eines Fahrzeugs anfragt, physisch im Besitz des Dokumentes über eine Führungserlaubnis ist, wie beispielsweise eines Führerscheins, da der physische Besitz einer solchen amtlichen Führungserlaubnis dadurch überprüfbar ist, dass an dem zugehörigen Dokument ein entsprechendes, durch die Lesevorrichtung erfassbares Sicherheitselement existent ist und festgestellt wird. So kann es sich hierbei insbesondere um ein maschinenlesbares Sicherheitselement handeln.

Da ein amtliches Dokument betreffend eine Führungserlaubnis, beispielsweise ein Kfz-Führerschein, nicht schon selbst ein derartiges Sicherheitselement aufweist, ist es erfindungsgemäß vorgesehen sein, ein derartiges Sicherheitselement nachträglich von einer autorisierten Stelle an einem Dokument zu befestigen.

Bei einer derartigen autorisierten Stelle muss es sich nicht zwangsläufig um eine staatliche Stelle handeln, sondern es kann vielmehr vorgesehen sein, dass es sich bei der autorisierten Stelle um diejenige Stelle handelt, welche z.B. gewerbsmäßig die Nutzung an Fahrzeugen überlässt. So kann es sich dementsprechend z.B. um den Betreiber einer Autovermietung oder um einen Carsharing-Betreiber handeln.

Es besteht so in einer Anwendung beispielsweise die Möglichkeit, dass eine Person, welche an einer Nutzungsüberlassung an einem Fahrzeug interessiert ist, sich bei dieser Stelle meldet, das insbesondere amtliche Dokument über die Führungserlaubnis des betreffenden Fahrzeugs vorlegt, dieses Dokument sodann nachträglich mit einem Sicherheitselement versehen wird, so dass sodann im Anschluss daran die betreffende Person automatisch Zugang zu dem betreffenden Fahrzeug, insbesondere zu jeder beliebigen Zeit erhält, ohne dass weiteres Personal für die Nutzungsüberlassung des Fahrzeugs nach einer Anbringung des Sicherheitselementes an dem Dokument benötigt wird.

So kann es in einer besonders bevorzugten Ausgestaltung des Verfahrens vorgesehen sein, dass eine entsprechende Lesevorrichtung zumindest zur Erfassung der Existenz des vorgenannten Sicherheitselementes z.B. an oder in einem Fahrzeug angebracht ist, wobei durch diese Lesevorrichtung oder eine nachgeordnete Steuervorrichtung der Zugang zum Fahrzeug und/oder das Starten des Fahrzeugs gesteuert werden kann.

Beispielsweise kann so erreicht werden, dass in einem Fuhrpark von Fahrzeugen eine nutzungsberechtigte Person mit dem Dokument und dem daran angeordneten Sicherheitselement sich einem gewünschten Fahrzeug nähert, hierdurch die in oder an dem Fahrzeug angeordnete Lesevorrichtung die Existenz des Sicherheitselementes erkennt und beispielsweise bei einem Fahrzeug automatisch die Zentralverriegelung öffnet sowie auch das Starten des Fahrzeugs zulässt, beispielsweise durch Deaktivieren einer Wegfahrsperre.

Ebenso kann es gegebenenfalls vorgesehen sein, dass zwar der Zugang zum Fahrzeuginneren noch mittels eines Schlüssels vorzunehmen ist, jedoch das Starten beispielsweise durch das Deaktivieren einer Wegfahrsperre anhand des Erkennens und gegebenenfalls einer weiteren Prüfung des Sicherheitselementes vorgenommen wird.

In einer anderen alternativen oder auch kumulativen Ausgestaltung des erfindungsgemäßen Verfahrens kann es vorgesehen sein, dass die Lesevorrichtung getrennt von einem Fahrzeug angeordnet ist und die Nutzung zulässt oder verweigert durch Ausgabe oder Nichtausgabe eines Zugangsmittels zum Fahrzeug.

Bei einem derartigen Zugangsmittel kann es sich beispielsweise um einen Schlüssel handeln. Dementsprechend kann es in einer beispielhaften Anwendung vorgesehen sein, dass ein solcher Schlüssel über einen Schlüsselautomaten automatisch dann ausgegeben wird, wenn sich eine nutzungsberechtigte Person mittels des Dokumentes zur Führungserlaubnis, also z.B. eines Führerscheins, gegenüber einem solchen Schlüsselautomaten legitimiert. Nach Erhalt des Zugangsmittels, insbesondere eines Schlüssels, ist somit die zur Nutzung berechtigte Person in die Lage versetzt, das betreffende Fahrzeug zu verwenden.

Als ein derartiges Sicherheitselement kommen z.B. kopiergeschützte Barcodes mit Farben, z.B. im unsichtbaren Wellenlängenbereich oder auch selbst klebende Magnetstreifen in Frage. Bei derartigen Sicherheitselementen kann es jedoch noch als nachteilig empfunden werden, dass ein amtliches Dokument mit einem solchen Sicherheitselement relativ genau auf eine hierfür vorgesehene Lesevorrichtung ausgerichtet sein muss. Darüber hinaus kann nicht ausgeschlossen werden, dass die Möglichkeit besteht, Kopien und Fälschungen derartiger Sicherheitselemente anfertigen zu können.

Erfindungsgemäß ist es daher vorgesehen, dass ein Sicherheitselement zur nachträglichen Anbringung an ein Dokument einen Transponder umfasst, der üblicherweise wenigstens einen Chip und wenigstens eine Antenne aufweist.

So und gegebenenfalls auch mit den vorgenannten Sicherheitselementen kann es in einer Weiterbildung des erfindungsgemäßen Verfahren vorgesehen sein, dass ein Sicherheitselement von der Lesevorrichtung lesbare Informationen/Daten umfasst, insbesondere solche Daten, die Informationen über eine nutzende Person enthalten.

So kann ein Sicherheitselement beispielsweise zumindest eine Nummer oder sonstige Daten aufweisen, über die der Inhaber des Dokumentes identifiziert werden kann.

Auf diese Weise besteht in einer Weiterbildung des erfindungsgemäßen Verfahrens die Möglichkeit, dass geprüft wird, ob die Informationen/Daten auf dem Sicherheitselement mit zum Fahrzeug gespeicherten Daten korrelieren, die beispielsweise in der Lesevorrichtung selbst oder in einer nachgeordneten Datenverarbeitungsanlage vorliegen können.

So besteht beispielsweise die Möglichkeit, durch Abspeicherung personenbezogener Daten auf dem Sicherheitselement vor der Anbringung an dem Dokument festzulegen, dass eine bestimmte so identifizierte Person berechtigt ist, ein ebenso bestimmtes Fahrzeug zu nutzen. So kann dann weiterhin bei der Gestattung des Zugangs zum Fahrzeug, beispielsweise durch eine der oben genannten Maßnahmen, geprüft werden, ob das Fahrzeug, welches automatisch zur Nutzung überlassen werden soll, vorher für diese bestimmte Person gebucht oder reserviert wurde. Nur bei einer Korrelation der Fahrzeugdaten mit den Personendaten und damit beispielsweise einer Übereinstimmung im Rahmen eines Buchungsvorgangs kann sodann die Nutzung gestattet werden.

In einer weiteren kumulativen oder alternativen Ausgestaltung des Verfahrens kann es ebenso vorgesehen sein, dass aus dem Sicherheitselement ausgelesene personenbezogene Daten zur Abrechnung der Nutzungsüberlassung herangezogen werden.

So kann insbesondere durch die Tatsache, dass das Sicherheitselement wenigstens einen Transponder umfasst, festgestellt werden, wann sich die Person in oder in der Nähe des Fahrzeugs befindet, da eine insbesondere permanente Funkverbindung zwischen dem Sicherheitselement und dem Fahrzeug, z.B. durch die darin vorgesehene Lesevorrichtung bestehen kann. So können beispielsweise Nutzungszeiträume wie auch die nutzende Person über das Fahrzeug selbst erfasst und gegebenenfalls abgerechnet werden.

Erfindungsgemäß ist das Sicherheitselement nicht kopierbar und nicht ohne eine Zerstörung von dem insbesondere amtlichen Dokument, an dem es angebracht wurde, lösbar.

Bevorzugt ist es vorgesehen, dass ein insbesondere amtliches Dokument, z.B. ein Führerschein, durch ein erfindungsgemäß angebrachtes Sicherheitselement nicht beschädigt und auch nicht entwertet wird, wofür es vorgesehen sein kann, dass ein Sicherheitselement bei Bedarf, insbesondere rückstandsfrei entfernbar ist. Auf diese Weise bleibt gewährleistet, dass Hoheitsbehörden, wie beispielsweise die Polizei, die Gültigkeit eines solchen amtlichen Dokumentes überprüfen kann und gegebenenfalls auch ein Sicherheitselement entfernen kann.

Es bleibt weiterhin gewährleistet, dass ein insbesondere von einer autorisierten Stelle ursprünglich angebrachtes Sicherheitselement nicht von einer Person entfernt und auf ein anderes Dokument oder einen anderen Träger übertragen wird, um so sicherzustellen, dass bei einem eventuellen Einzug der Führungserlaubnis, z.B. des Führerscheins durch Hoheitsbehörden, automatisch auch verhindert wird, dass diese Person ohne Erlaubnis weiterhin das Fahrzeug nutzen kann. Dies ist ausgeschlossen, da bei der gewünschten Nutzung des Fahrzeugs die Existenz des Sicherheitselementes nicht mehr positiv geprüft wird und insofern durch das erfindungsgemäße Verfahren der Zugang bzw. die Nutzung des Fahrzeugs verweigert wird.

Sofern eine Person versuchen sollte, ein Sicherheitselement von dem Dokument zu entfernen, ist es gemäß der Erfindung vorgesehen, dass bei der Ablösung des Sicherheitselementes vom Dokument dieses Sicherheitselement oder zumindest dessen Funktion zerstört wird. Hierdurch wird die Übertragbarkeit in jedem Falle ausgeschlossen.

Gemäß dem erfindungsgemäßen Verfahren wird dies dadurch erreicht, dass ein Sicherheitselement wenigstens einen Transponder umfasst mit wenigstens einem Chip und wenigstens einer Antenne, wobei das Ablösen des Sicherheitselementes eine Zerstörung wenigstens eines Teilbereichs eines Transponders, insbesondere das Trennen einer Verbindung zwischen Chip und Antenne bewirkt.

Transponder bzw. RFID-Chipmodule erweisen sich im vorliegenden Verfahren als besonders geeignet, da sie fälschungssicher sind und die Speicherung großer Datenmengen erlauben. Eine zugehörige Lesevorrichtung, z.B. im Fahrzeug oder auch separat zu einem Fahrzeug, beispielsweise an einem Schlüsselausgabeautomaten, kann sehr preiswert realisiert werden.

Im Rahmen des erfindungsgemäßen Verfahrens kann ein solches System weitgehend unabhängig von der Position des Sicherheitselementes auf dem Dokument und auch unabhängig von der Positionierung des Dokumentes gegenüber der Lesevorrichtung arbeiten. Der Einsatz im Außenbereich ist problemlos möglich und der Einsatz als Zugangssystem zu einem einzelnen Fahrzeug lässt sich beispielsweise dadurch realisieren, dass z.B. hinter einer Scheibe, beispielsweise der Windschutzscheibe, eine Leseantenne sowohl zur Prüfung der Existenz des Sicherheitselementes als auch zum Auslesen gegebenenfalls darin gespeicherter Daten realisiert ist. Hierbei kann insbesondere wie bei der Transpondertechnik üblich auch vorgesehen sein, dass mittels der Leseantenne die benötigte Energie zum Auslesen der Daten in den Transponder eingestrahlt wird.

Ein Sicherheitselement zur nachträglichen Anbringung an ein Dokument, welches eine Führungserlaubnis für ein Fahrzeug z.B. amtlicherseits belegt und wenigstens einen Transponder mit wenigstens einem Chip und wenigstens einer Antenne umfasst, ist wie vorgenannt, bevorzugt am Dokument nachträglich befestigbar und bei einer Ablösung zumindest in einem Teilbereich zerstörbar.

Dies kann gemäß einer bevorzugten Ausgestaltung des Sicherheitselementes dadurch erreicht werden, dass durch ein Ablösen ein zerstörungsempfindlicher Bereich zerstört, z.B. eine Verbindung zwischen Chip und Antenne getrennt wird.

In einer besonders bevorzugten Ausgestaltung kann hierfür ein zerstörungsempfindlicher Bereich, insbesondere ein Verbindungsbereich zwischen Chip und Antenne, separat zu den übrigen Bereichen des Sicherheitselementes an einem Dokument befestigbar sein. Durch die separate Befestigung wird erreicht, dass bei dem Versuch, ein derartiges Sicherheitselement abzulösen, üblicherweise zunächst erst eine der möglichen Befestigungen aufgetrennt wird, wodurch es bei Bestehen der weiteren Befestigung sodann zu einer Zerstörung des zerstörungsempfindlichen Bereichs kommt, beispielsweise dadurch, dass Zug- oder Biegekräfte bei der Ablösebewegung zwischen diesen separaten Befestigungsbereichen wirken.

So kann es in einer besonders bevorzugten Ausgestaltung eines derartigen Sicherheitselementes vorgesehen sein, dass dieses einen insbesondere transparenten, am Dokument befestigbaren Träger aufweist, der den wenigstens einen Transponder trägt, wobei der Träger eine Aussparung aufweist, in der ein zerstörungsempfindlicher Bereich eines Transponders, insbesondere wenigstens eine Antennenleitung und/oder wenigstens ein Chip angeordnet ist, insbesondere wobei innerhalb der Aussparung eine Verbindung zwischen Dokument und zerstörungsempfindlichen Bereich herstellbar ist. So ergeben sich zwei unabhängige Befestigungen, zum einen über den Träger und zum anderen in der Aussparung.

Durch die grundsätzliche Ausgestaltung eines Trägers aus transparentem Material bei allen möglichen Ausführungsformen eines Sicherheitselementes wird erreicht, dass die auf einem Dokument wiedergegebenen Daten auch nach der Anbringung eines solchen Sicherheitselementes weiterhin visuell kontrollierbar sind.

Bezogen auf die vorgenannte Ausführung wird weiterhin erreicht, dass durch eine in dem Träger vorgesehene Aussparung ein darin angeordneter zerstörungsempfindlicher Bereich, wie z.B. eine Antennenleitung, die üblicherweise aus einem sehr dünnen, sehr leicht reißenden Draht besteht, oder ein Chip separat zu den üblichen Bereichen mit dem Dokument verbunden werden kann.

Dies kann beispielsweise dadurch erfolgen, dass der innerhalb der Aussparung angeordnete zerstörungsempfindliche Bereich mit einem Tropfen Kleber innerhalb dieser Aussparung mit dem Dokument verbunden wird. Hierbei kann insbesondere der Kleber ebenso ablösbar sein.

Wird sodann versucht, ein derart befestigtes Sicherheitselement von dem Dokument zu entfernen, so kann zwar gegebenenfalls eine der Befestigungen zum Dokument gelöst werden, es bleibt jedoch der innerhalb der Aussparung und insofern nicht mit dem Träger weiter verbundene störungsempfindliche Bereich fest mit dem Dokument verbunden, so dass bei einer Zug-, Druck- oder sonstigen Belastung dieser zerstörungsempfindliche Bereich üblicherweise zerstört wird, beispielsweise dadurch, dass der dünne Draht einer Antennenleitung zerreißt.

In einer möglichen Ausgestaltung des erfindungsgemäßen Sicherheitselementes kann dies z.B. dadurch realisiert sein, dass der Träger eine Hülle bildet, in die ein Dokument, wie beispielsweise ein Führerschein, z.B. durch einen Einführschlitz einschiebbar ist. Diese Hülle kann sodann eine Aussparung z.B. ein Loch aufweisen, durch die das Dokument von außen zugänglich ist, wobei innerhalb dieser Aussparung der zerstörungsempfindliche Bereich angeordnet ist, beispielsweise eine Antennenleitung durch diese Aussparung hindurch verläuft und/oder ein Chip darin angeordnet ist.

Ein Dokument kann dementsprechend sehr leicht wieder aus einer solchen Hülle entfernt werden, wodurch der Transponder vom Dokument gleichsam entfernt wird, wobei jedoch aufgrund der separaten Befestigung innerhalb der Aussparung der zerstörungsempfindliche Bereich des Transponders aufgrund der nach wie vor bestehenden Befestigung, beispielsweise Verklebung, an dem Dokument verbleibt.

In einer anderen Alternative kann auch eine Hülle vorgesehen sein, die vollständig, insbesondere ohne eine Aussparung ein Dokument nach der Befestigung umgibt. Auch eine solche Hülle ist bevorzugt transparent. Eine derartige Hülle kann z.B. in der Art eines Briefumschlages ausgebildet sein, d.h. ein Dokument wird in eine solche Hülle eingelegt und sodann eine Lasche verschlossen, insbesondere durch Verklebung.

Bevorzugt ist es vorgesehen, dass eine Zerstörung eines Transponders erfolgt, z.B. durch ein Durchtrennen einer Verbindung zwischen Chip und Antenne, wenn das Dokument aus der Hülle herausgenommen wird, wofür die Hülle aufgerissen werden muss.

Dies kann bevorzugt derart erreicht werden, dass eine Antennenleitung zumindest bereichsweise in wenigstens einem Verschlussbereich der Hülle angeordnet ist. Besonders bevorzugt kann die Ausgestaltung der Hülle so sein, dass eine Antennenleitung in den Randbereichen der Hülle verläuft, so dass diese Leitung zerstört wird, egal von welcher Seite aus jemand die Hülle zu öffnen versucht.

Ebenso kann es vorgesehen sein, dass der Träger ein Klebeetikett bildet, welches die vorgenannte Aussparung aufweist.

In einer weiteren alternativen oder kumulativen Ausgestaltung des erfindungsgemäßen Sicherheitselementes kann es vorgesehen sein, dass es einen insbesondere transparenten, am Dokument befestigbaren Träger aufweist, der wenigstens einen Transponder trägt, wobei der Träger wenigstens zwei, insbesondere selbstklebende, Klebebereiche aufweist, in denen voneinander getrennte Bauteile des Transponders angeordnet sind.

Hierbei kann es insbesondere vorgesehen sein, dass zwischen wenigstens zwei solchen Bereichen eine auftrennbare Verbindung besteht, deren Vorhandensein für die Funktion eines Transponders nötig ist und deren Unterbrechung zur Funktionszerstörung eines Transponders führt. Sind somit bei einem derartigen Sicherheitselement mehrere Bauteile des Transponders separat zueinander z.B. durch Verklebung an dem Dokument befestigt, so besteht eine sehr hohe Wahrscheinlichkeit, dass bei dem Versuch des Ablösens eines derartigen Sicherheitselementes zwar die betreffende Person den ein oder anderen Klebebereich lösen kann, hierbei jedoch derart hohe Kräfte auf die bestehende Bauteil-Verbindung zwischen den einzelnen Klebebereichen ausgeübt wird, dass diese Bauteil-Verbindung getrennt, beispielsweise zerrissen wird.

In einer Ausführung kann es vorgesehen sein, dass wenigstens zwei Klebebereiche getrennt nebeneinander angeordnet sind und/oder wenigstens eine Klebebereich wenigstens einen anderen Klebebereich überdeckt.

Bei einer z.B. überdeckenden Ausführung kann unter einem ersten kleineren Klebebereich der Transponderchip angeordnet sein, wobei dieser Klebebereich von einem größeren Klebebereich überdeckt, unter dem z.B. eine gewickelte Antenne angeordnet ist. Bei einer solchen überdeckenden Anordnung ist es vorteilhaft, wenn der kleinere überdeckte Klebebereich nicht selbst am größeren überdeckende Klebebereich anhaftet.

Versucht nun eine Person einen so geklebten Transponderträger von einem Dokument zu entfernen, so wird zunächst der größere und damit auch äußere Klebebereich angehoben und entfernt, wobei aber der darunterliegende fest mit dem Dokument verbunden bleibt. Hierdurch werden Zug-, Reiß und/oder Biegekräfte auf ein verbindendes Bauteil, z.B. eine Antennenzuleitung ausgeübt, welches somit zerstört wird. Der Transponderchip bleibt bei der Ablösung somit auf dem Dokument zurück und kann separat entfernt werden.

So bleibt weiterhin gewährleistet, dass ein Sicherheitselement nach einer einmaligen Befestigung an einem Dokument von diesem nicht wieder ohne Zerstörung und damit Verlust der autorisierenden Funktion abgelöst wird.

Das vorgenannte Verfahren und das beschriebene Sicherheitselement kann in einem Beispiel zur Anwendung der Erfindung eingesetzt werden bei einem System für ein Carsharing-Unternehmen.

Bei der Aufnahme eines neuen Kunden in das System muss dieser seinen Führerschein bei einer autorisierten Stelle lediglich einmalig vorlegen. Dort wird der Führerschein überprüft und das Sicherheitselement wird auf dem Führerschein aufgebracht und gegebenenfalls mit weiteren Daten, beispielsweise über ein bestimmtes Fahrzeug oder insbesondere mit den Kundendaten geladen. Die Kundendaten werden weiterhin im System des Carsharingbetreibers erfasst.

Bei Beginn eines Mietvorgangs, d.h. der beabsichtigten Nutzung eines Fahrzeugs, kann es sodann vorgesehen sein, dass der Bordcomputer des Fahrzeugs oder aber auch ein Schlüsselausgabeautomat die Daten aus dem auf dem Führerschein angebrachten Sicherheitselement ausliest und überprüft, um sodann die Nutzungsberechtigung des betreffenden Kunden festzustellen. Hierdurch kann sichergestellt werden, dass nur Kunden mit gültiger Fahrerlaubnis Zugriff auf die Fahrzeuge des Carsharingunternehmens erhalten. Wenn der Führerschein z.B. aufgrund einer Verkehrsübertretung eingezogen wird, verliert der Kunde somit automatisch auch die Nutzungsberechtigung für die Fahrzeugflotte des Carsharingunternehmens.

In gleicher Weise kann eine Anwendung des Verfahrens auch bei einem gemeinschaftlich genutzten Fahrzeugpool von Firmen oder auch Behörden Anwendung finden.

Ein weiteres Beispiel ist auch die Anwendung der Erfindung in Verbindung mit einem elektronischen Fahrtenbuch in persönlich zugeordneten Dienstwagen. Das elektronische Fahrtenbuch wird z.B. durch eine Lesevorrichtung für das Führerscheinsicherheitselement erweitert. In regelmäßigen Abständen kann das Fahrtenbuch die Vorlage des Führerscheins verlangen. Wenn kein gültiges Sicherheitselement auf dem Führerschein vorhanden ist, kann sodann z.B. eine Wegfahrsperre aktiviert werden oder ein Fuhrparkleiter kann z.B. über Mobilfunk über die Fahrten ohne Führerschein automatisch von der Vorrichtung des elektronischen Fahrtenbuchs benachrichtigt werden.

Wesentlich für das erfindungsgemäße Verfahren ist es, dass der Betreiber eines Systems zur Nutzungsüberlassung von Fahrzeugen an Personen von seiner regelmäßigen Führerscheinkontrollpflicht entlastet wird und insofern eine größere Rechtssicherheit für derartige Unternehmen geschaffen wird.

Weitere beispielhafte Anwendungsbereiche sind auch die Überprüfung des Pilotenscheins oder auch von medizinischen Attests bei der Vermietung von Flugzeugen, beispielsweise Sportflugzeugen oder auch in anderen Bereichen, bei denen die Nutzung einer jeglichen Ressource an ein z.B. amtliches Dokument zur Nutzungserlaubnis gebunden ist.

Die nachfolgenden Figuren verdeutlichen anhand des dargestellten Sicherheitselementes die Möglichkeiten im Rahmen des Verfahrens. Es zeigen:
- Figur 1: ein erfindungsgemäßes Sicherheitselement als Klebeettikett

- Figur 2: die Anbringung eines derartigen Sicherheitselementes auf einem Führerschein
- Figur 3: eine Ausschnittsvergrößerung des angebrachten Sicherheitselementes
- Figur 4: eine Hülle mit Einschubschlitz und Aussparung für ein Dokument
- Figur 5: eine Hülle mit verschließbaren Laschen und im Rand/Laschenbereich angeordneter Antennenleitung.

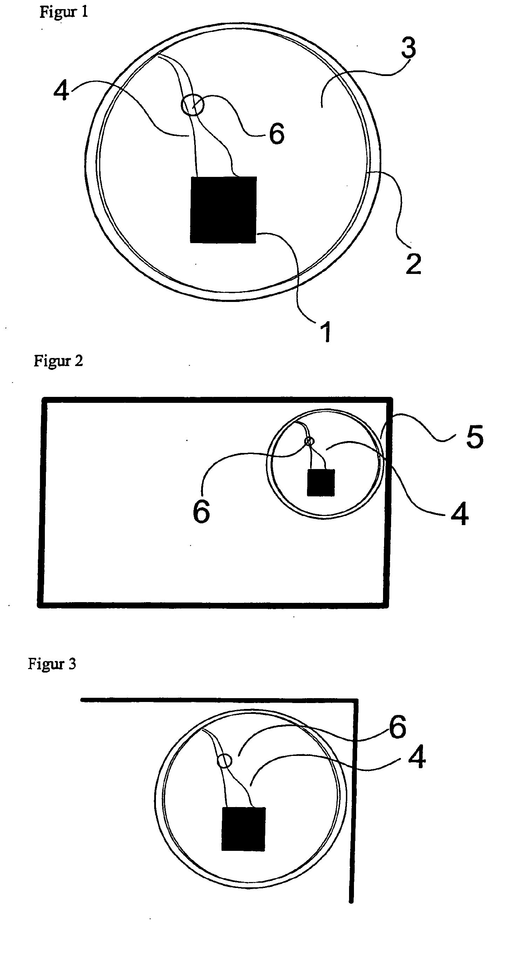

Die Figur 1 zeigt ein beispielhaftes erfindungsgemäßes Sicherheitselement, welches ausgebildet ist als ein transparenter Träger 3 mit einer Klebebeschichtung, die im vorliegenden Fall nicht dargestellt ist und sich hier auf der Unterseite des Trägers 3 befindet, wobei dieser Träger 3 einen Transponder trägt, umfassend einen Chip 1 und einer Antenne 2, wobei der Chip 1 mit der Antenne 2, die im Randbereich des äußeren Umfanges des hier kreisförmigen Trägers angeordnet ist, über Zuleitungen 4 verbunden ist, die durch eine Aussparung 6 innerhalb des Trägers führen.

In der Figur 2 ist dargestellt, wie ein derartiges Sicherheitselement z.B. auf einem Führerschein als amtliches Dokument angebracht sein kann. Aufgrund der Transparenz des Sicherheitselementes besteht auch nach der Anbringung noch die Möglichkeit die relevanten Daten auf dem Führerschein visuell wahrzunehmen.

Nach der Anbringung des Sicherheitselementes über die auf der Unterseite angebrachte Klebeschicht sind weiterhin noch die durch die Aussparung 6 verlaufenden Drähte der Antennenzuleitung mit dem Führerschein zu verbinden, beispielsweise dadurch, dass ein Tropfen Kleber in die Aussparung gebracht wird.

Hierdurch verbinden sich die beiden Zuleitungen zur Antenne separat von den übrigen Bereichen des Sicherheitselementes mit dem Führerschein.

Die Figur 3 zeigt eine Ausschnittsvergrößerung des aufgebrachten Sicherheitselementes. Wird nun versucht, dieses Sicherheitselement vom Führerschein zu lösen, so gelingt die Ablösung des großflächigen Sicherheitselementes, d.h. des Trägers im wesentlichen rückstandsfrei, es ist jedoch separat hierzu in der Aussparung die Verbindung der Antennenzuleitung 4 zum Führerschein gegeben, die zunächst bei dem Ablöseversuch bestehen bleibt, so dass bei der Ablösung Kräfte auf die Zuleitungsdrähte ausgeübt werden, die zu einem Zerreißen der Drähte führen. Hierdurch wird das Sicherheitselement bzw. dessen Funktion zerstört, so dass es nicht mehr im Rahmen einer Nutzungsüberlassung eingesetzt werden kann.

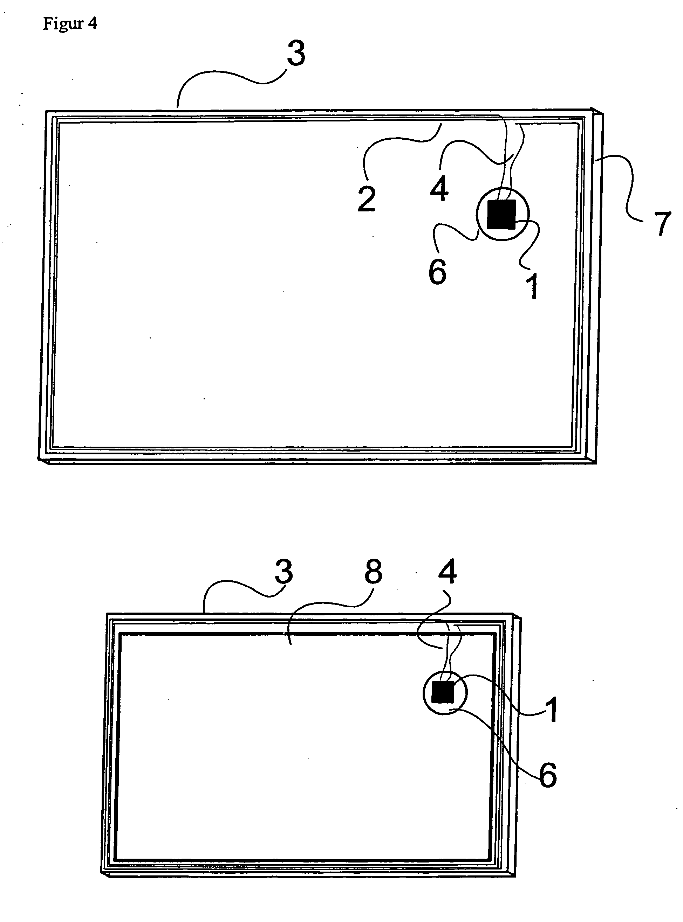

In der Ausführung gemäß Figur 4 ist der Träger 3 als transparente Hülle ausgebildet, die einen seitlichen Schlitz 7 aufweist, durch den ein Dokument, hier ein Führerschein 8 in die Hülle eingeschoben werden kann. Die Hülle weist eine Aussparung 6 auf, in der der Chip 1 des Transponders mit zwei Zuleitungen 4 zur Antenne 2 angeordnet ist. Die Antenne 2 ist im Randbereich der Hülle angeordnet.

Die untere Darstellung der Figur 4 zeigt einen Führerschein 8, der in die Hülle eingeschoben ist. Der Führerschein 8 ist über die Aussparung 6 von aussen zugänglich, d.h. es kann in der Aussparung eines separate Befestigung, des Chips 1 am Führerschein 8 z.B. durch Verklebung erfolgen. Hierfür kann ein Tropfen Kleber in die Aussparung eingelassen werden.

Bei einem Herausziehen des Führerscheines 8 aus der Hülle 3 wird der Chip 1, der am Führerschein befestigt ist gegenüber der Hülle 3 bewegt, wodurch die Zuleitungen 4 zur Antenne 2 reissen.

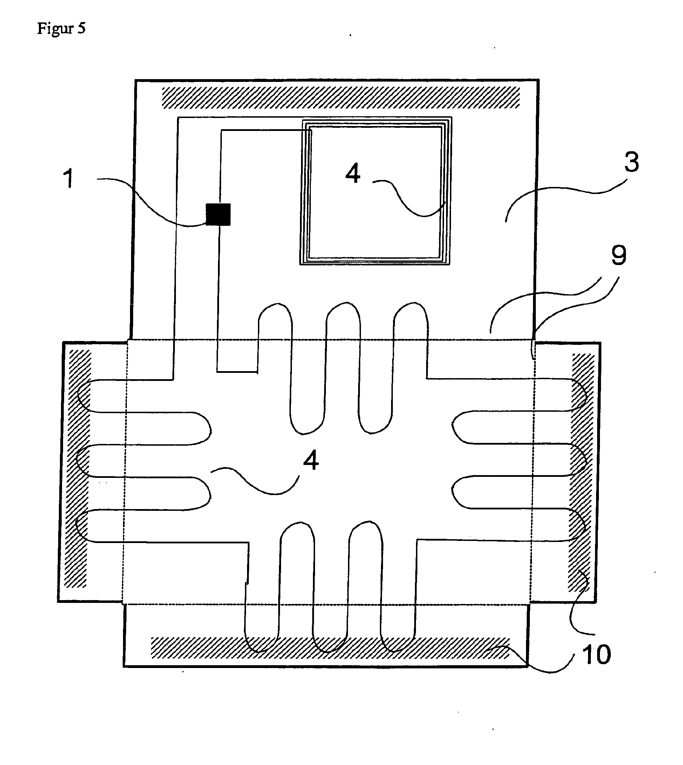

In der Ausführung gemäß Figur 5 ist die Hülle 3 bzw. der Träger 3 des Transponders als Umschlag ausgebildet, wobei die Figur die noch ungefaltete Hülle 3 zeigt. Erkennbar ist, dass in den Bereichen 9, wo der Umschlag geknickt/gefalzt wird eine Zuleitung 4 zur Antenne 2 verläuft. Durch das Zusammenfalten des Umschlages werden die Laschen mit Ihren Klebebereichen 10 verklebt, nachdem das Dokument im Umschlag liegt.

Wird der Umschlag an welcher Seite auch immer aufgetrennt, um das Dokument zu entnehmen, so werden zwangsläufig die Antennenzuleitungen 4, die hier meanderförmig im Klebebereich der Laschen ausgebildet sind, zerstört. Hierfür werden allgemein die Zuleitung bzw. ggfs. die Antenne selbst im Randbereich der Hülle verlegt.

Eine Antennenzuleitung wird bevorzugt eine Falzlinie zumindest einmal überschreiten, was hier durch die meanderförmige Ausgestaltung mehrfach erfolgt.

Drei Seiten des hier dargestellten Umschlages können bei der Herstellung bereits verschlossen sein. Die vierte Seite wird durch Umlegen und Verkleben der letzten Lasche verschlossen, nachdem der Führerschein in den Umschlag eingelegt wurde.

## Patentansprüche

1. Verfahren zur Nutzungsüberlassung wenigstens eines Fahrzeuges an eine Person nach Prüfung einer amtlichen Führungserlaubnis dieser Person, wobei vor einer Nutzungsüberlassung das physische Vorhandensein einer amtlichen Führungserlaubnis bei der nutzenden Person geprüft wird, automatisch durch eine Lesevorrichtung die Existenz eines an einem amtlichen die Führungserlaubnis belegenden Dokument befestigten Sicherheitselementes geprüft wird, bei positiver Existenzprüfung die Nutzung erlaubt und bei negativer Existenzprüfung die Nutzung verweigert wird, **dadurch gekennzeichnet, dass** ein Sicherheitselement nachträglich von einer autorisierten Stelle an einem amtlichen die Führungserlaubnis belegenden Dokument befestigt wird, welches wenigstens einen Transponder umfasst mit wenigstens einem Chip und wenigstens einer Antenne wobei das Ablösen des Sicherheitselementes eine Zerstörung wenigstens eines Teilbereiches eines Transponders bewirkt.

2. Verfahren nach Anspruch 1, **dadurch gekennzeichnet, dass** die Zerstörung durch das Trennen einer Verbindung zwischen Chip und Antenne bewirkt wird.

3. Verfahren nach einem der vorherigen Ansprüche, **dadurch gekennzeichnet, dass** die Lesevorrichtung an/in einem Fahrzeug angebracht ist und den Zugang zum Fahrzeug und/oder das Starten des Fahrzeugs steuert.

4. Verfahren nach einem der vorherigen Ansprüche, **dadurch gekennzeichnet, dass** die Lesevorrichtung getrennt von einem Fahrzeug angeordnet ist und die Nutzung zulässt oder verweigert durch Ausgabe oder Nicht-Ausgabe eines Zugangsmittels zum Fahrzeug, insbesondere eines Schlüssels.

5. Verfahren nach einem der vorherigen Ansprüche, **dadurch gekennzeichnet, dass** ein Sicherheitselement von der Lesevorrichtung lesbare Informationen/Daten, insbesondere über eine nutzende Person, umfasst.

6. Verfahren nach Anspruch 5, **dadurch gekennzeichnet, dass** geprüft wird, ob die Informationen/Daten mit zum Fahrzeug gespeicherten Daten korrelieren, die insbesondere in der Lesevorrichtung vorliegen können.

7. Verfahren nach Anspruch 5 oder 6, **dadurch gekennzeichnet, dass** aus dem Sicherheitselement ausgelesene personenbezogene Daten zur Abrechnung der Nutzungsüberlassung herangezogen werden.

## Claims

1. Method for surrender of use of at least one vehicle to a person following verification of an official driving permit for said person, wherein before a surrender of use, the physical presence of an official driving permit for the person using said vehicle is verified, the existence of a security element attached to an official document certifying permission to drive is automatically verified by a reading device, on positive verification of existence, use is allowed and on negative verification of existence, use is refused, **characterised in that** a security element is subsequently fastened by an authorised agency to an official document verifying the driving permit, said security element comprising at least one transponder with at least one microchip and at least one antenna, wherein detachment of the security element causes destruction of at least a portion of a transponder.

2. Method according to claim 1, **characterised in that** the destruction is brought about by separation of a connection between the microchip and the antenna.

3. Method according to one of the preceding claims, **characterised in that** the reading device is applied on/in a vehicle and controls access to the vehicle and/or starting of the vehicle.

4. Method according to one of the preceding claims, **characterised in that** the reading device is arranged separated from a vehicle and allows or refuses use by issue or non-issue of a means of access to the vehicle, particularly a key.

5. Method according to one of the preceding claims, **characterised in that** a security element comprises information/data that is readable by the reading device, particularly via a user.

6. Method according to claim 5, **characterised in that** it is verified whether the information/data correlate to stored data which relate to the vehicle and can be present in the reading device.

7. Method according to claim 5 or 6, **characterised in that** person-related data read out from the security element are made use of for billing in relation to the surrender of use.

## Revendications

1. Procédé de cession pour utilisation d'au moins un véhicule à une personne après vérification d'un permis de conduire officiel de cette personne, avant une cession pour utilisation, la présence physique d'un permis de conduire officiel étant vérifiée auprès de la personne qui l'utilise, l'existence d'un élément de sécurité fixé sur un document officiel, attestant le permis de conduire étant vérifié automatiquement par un dispositif de lecture, en cas de vérification positive de l'existence, l'utilisation étant permise et en cas de vérification négative de l'existence, l'utilisation étant refusée, **caractérisé en ce qu'**un élément de sécurité est fixé ultérieurement par un service autorisé sur un document officiel, attestant le permis de conduire, qui comporte au moins un transpondeur avec au moins une puce et au moins une antenne, le détachement de l'élément de sécurité provoquant une destruction d'au moins une zone partielle d'un transpondeur.

2. Procédé selon la revendication 1, **caractérisé en ce que** la destruction est provoquée par la séparation d'une liaison entre la puce et l'antenne.

3. Procédé selon l'une quelconque des revendications précédentes, **caractérisé en ce que** le dispositif de lecture est monté sur/dans un véhicule et commande l'accès au véhicule et/ou le démarrage du véhicule.

4. Procédé selon l'une quelconque des revendications précédentes, **caractérisé en ce que** le dispositif de lecture est disposé séparément d'un véhicule et autorise ou refuse l'utilisation par délivrance ou non délivrance d'un moyen d'accès au véhicule, en particulier d'une clé.

5. Procédé selon l'une quelconque des revendications précédentes, **caractérisé en ce qu'**un élément de sécurité comporte des informations/données lisibles par le dispositif de lecture, en particulier sur une personne qui l'utilise.

6. Procédé selon la revendication 5, **caractérisé en ce qu'**il est vérifié si les informations/données sont en corrélation avec des données enregistrées pour le véhicule, qui peuvent être déjà en particulier dans le dispositif de lecture.

7. Procédé selon la revendication 5 ou 6,
**caractérisé en ce que** des données relatives aux personnes, choisies dans l'élément de sécurité sont consultées pour le règlement de la cession pour utilisation.
